(19) Europäisches Patentamt
European Patent Office
Office européen des brevets

(11) EP 0 528 366 B1

(12) **EUROPEAN PATENT SPECIFICATION**

(45) Date of publication and mention
of the grant of the patent:
**29.10.1997 Bulletin 1997/44**

(51) Int Cl.6: **H04N 5/14**

(21) Application number: **92113848.3**

(22) Date of filing: **13.08.1992**

(54) **Method and circuit arrangement for movement detection in a television picture**

Verfahren und Schaltungsanordnung zur Bewegungsdetektion in einem Fernsehbild

Méthode et configuration de circuit pour la détection de mouvement dans une image de télévision

(84) Designated Contracting States:
**DE ES FR GB IT NL SE**

(30) Priority: **16.08.1991 FI 913883**

(43) Date of publication of application:
**24.02.1993 Bulletin 1993/08**

(73) Proprietor: **SALORA OY**
**SF-241 00 Salo (FI)**

(72) Inventor: **Koivunen, Tero**
**SF-33720 Tampere (FR)**

(74) Representative: **Feldkamp, Rainer, Dipl.-Ing. et al**
**Patentanwälte**
**Wallach, Koch, Dr. Haibach, Feldkamp**
**Postfach 12 11 20**
**80035 München (DE)**

(56) References cited:
**US-A- 3 582 546**

- **SIGNAL PROCESSING. IMAGE COMMUNICATION vol. 2, no. 1, May 1990, AMSTERDAM NL pages 29 - 37 SPEIDEL 'A SIMPLIFIED MOTION ESTIMATOR BASED ON BINARY CORRELATION'**
- **PATENT ABSTRACTS OF JAPAN vol. 13, no. 216 (E-760)(3564) 19 May 1989 & JP-A-127380 (FUJITSU) 30 jan.1989**

## Description

The invention relates to a method and a circuit arrangement for movement detection in a television picture, wherein the video signal is in digital form and the picture is divided into blocks comprising more than one picture element, and wherein a code word is generated for each block, the code word being compared with the code word of the corresponding block of a previous picture in order to make the movement decision.

A television picture comprises two half pictures or fields which are scanned in an interlaced mode. Thus the lines of different half pictures will not coincide. If the picture contains straight horizontal boundaries having a strong contrast, then 25 Hz flicker will occur there. In the PAL standard, the interlaced fields of the picture are scanned at a frequency of 50 Hz. When the picture is dark, the 50 Hz frame rate does not appear as disturbing, whereas the eye will clearly perceive flicker in brighter parts of the picture, and the flicker problem is emphasized, if the picture area is large and the viewing angle is wide. It is possible to reduce the flicker in the picture or to remove it completely by storing a field in a field memory and displaying it, either as such or slightly modified, twice during the same period. Then the field rate increases to 100 Hz and the flicker is not anymore disturbing.

The appearance of the line structure in the picture and the disadvantages due to interlacing can be reduced by using progressive scanning. This means that both fields are first written into a memory and read therefrom at alternating lines. Thus the whole picture is scanned in one operation. The method requires the doubling of the line rate. The original field rate is retained in this method.

So called movement adaptive methods can be used both to increase the line rate, line rate upconversion (LRU), and to increase the field rate, field rate upconversion (FRU). The movement adaptive methods switch between two algorithms, optimized for a static and a moving picture, depending on whether the picture contains movement or not. Movement detection is thus required in the movement adaptive methods.

Known and previously used movement detection methods in most cases are based on difference signals calculated between two pictures and on decisions made from these whether the picture is moving or stationary. A disadvantage of these known methods is their sensitivity to noise. The noise can cause exceptionally large changes in luminance differences, which can cause a wrong movement decision. A wrong movement decision without exception causes degradation of the picture quality in all movement adaptive methods. Usually the methods require at least two field memories.

The US-A-3 582 546 discloses a method and circuit arrangement according to the preambles of claims 1 and 6, in particular a redundancy reduction system for video signals wherein the amplitude samples of each picture element are digitized and wherein a code word is generated for blocks of the picture, each block comprising more than one picture element. The code word is generated by subtracting the absolute magnitude of the difference of the amplitudes of the first and second sample of a block from the amplitude of the third sample of the block, whereupon the absolute magnitude of the result of this subtraction is subtracted from the magnitude of the forth sample of the block and so on. Only the least significant bits of the final result formed in this manner for a block are used as a code word for this block, and the code words for the same block in successive pictures are compared and used as an indication for a movement in the television picture. In view of the fact that only the least significant bits of the result of the above subtraction method are evaluated, this method is rather sensitive to noise and digitalization errors.

From the JP-A-127 380 (patent abstracts of Japan, Vol. 13, No. 216E760, 3564, 19-05-89), an inter-frame coding system is known wherein 8-bit picture element data is inputted to binarizing circuits wherein bit values of a Laplacian filter are multiplied with each picture element. The result of multiplication is compared with a threshold value and a binary '1' is produced when the result is larger than the threshold value, whereas a binary '0' is produced when the result is smaller than the threshold value. All results are stored in a respective frame memory.

The object of the present invention is to provide a method and apparatus for movement detection which is reliable, has a very good noise tolerance and reduces the manufacturing cost of the circuits for performing the method.

According to one aspect of the present invention as defined in claim 1, a method for movement detection in a television picture is provided, wherein the video signal is in digital form and the picture is divided into blocks having the size of more than one picture element, each picture element being represented by a digital video signal sample comprising a plurality of bits and wherein a code word is generated for each block, the code word being compared with the code word of the corresponding block of a previous picture in order to make the movement decision. This method is characterized by the fact that a predetermined number of the most significant bits of each digital video signal sample of the picture elements of a block is used for generating the code words.

According to a preferred embodiment, the predetermined number equals 1, i.e. only the most significant bit of each digital video sample is used for generating the code words.

According to a further aspect of the present invention as defined in claim 6, a circuit arrangement is provided for performing the above method, said arrangement comprising: a memory block in which the picture is divided into blocks having the size of more than one picture element and containing at least one line memory and at least two delays; means for generating a code word for each block; a comparison block in which the code word generated for the block is compared with the code word of the corresponding block of the previous picture and containing a RAM memory into which the previous picture is stored; and circuits to perform the comparison. Said arrangement is characterized by the fact that it comprises:

- a thresholding block, to which the digital video signal sample is supplied and from which a predetermined number of the most significant bits of each video signal sample of the picture elements of a block is supplied to the memory block, and

- a coding block, to which the signal is supplied from the memory block and where a code word is generated for the blocks using said predetermined number of the most significant bits of the digital video signal samples of a respective block and which comprises shift-and-add circuits and from which said code word is supplied to the comparison block.

The method for movement detection of the present invention is not sensitive to noise and can be realized using less field memory than with prior known methods.

With the present invention, the digital video signal sample is cut, i.e. only one or more of the most significant bits are used, and the code word is generated using the cut video signal samples.

With the present invention, video signal samples of several bits are cut in a thresholding block, whereupon with the aid of line memories and delays, blocks having the size of several picture elements are generated from the picture, the movement detection being performed on these blocks. A code word is generated for each block with the aid of a shift-and-add circuit, the code word containing for each picture element a number of bits corresponding to the length of the cut video signal sample. Finally the corresponding code words of two pictures are compared in the comparison block. The code words of the previous picture are obtained from a RAM memory. If the code words differ, there was a movement, and if they are equal, then there was no movement.

The invention is described in further detail below with reference to the enclosed drawings, in which

Fig. 1 shows a block diagram of a circuit realizing the method of the present invention,

Fig. 2 shows the division of a picture into blocks of 2*2 elements, and

Fig. 3 shows a more detailed construction of a circuit for performing the method of the present invention.

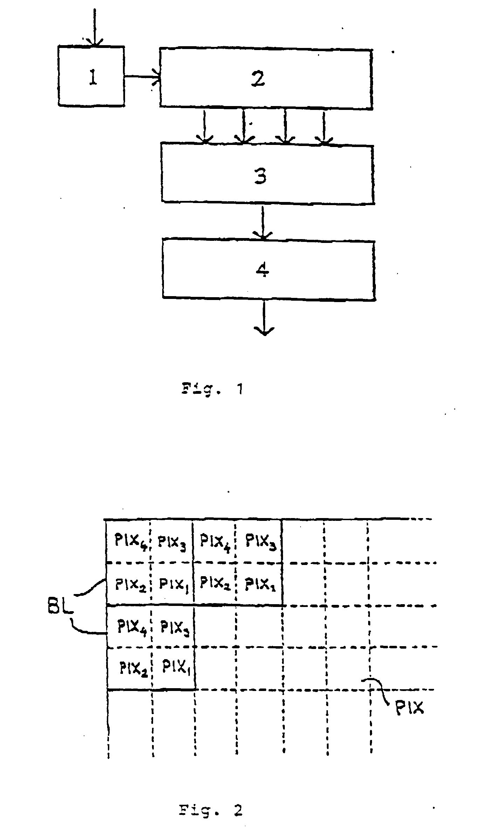

Fig. 1 shows a block diagram of a circuit for performing the method. The video signal is in a digital form and it is processed with the methods of digital signal processing. Below is explained as an example the cutting of an 8-bit video signal sample into a 1-bit signal in the thresholding block 1. The video signal sample may contain any number of bits in the method according to the invention and it can also be cut into a signal which contains more than one bit after the cutting. Cutting the 8-bit sample into a 1-bit signal corresponds to the thresholding of a picture with 256 shades into a picture with 2 shades. The cutting can be made because the most significant bit of the sample provides sufficient information for the detection of a movement. Blocks of e. g. 2*2 picture elements in the horizontal and vertical directions are formed of the picture after the cutting, the detection being performed on these blocks.

The blocks are generated in the memory block 2 containing a line memory LT and two delays T with the length of one sample. As a result of the block generation the resolution of the movement detector is also 2*2 picture elements. Then a code word is generated in the coding block 3 for each block of 2*2 picture elements. The code word for each picture element contains a number of bits corresponding to the length of the cut sample, i.e. in this example the code word contains one bit for each picture element, whereby the code word representing one block contains a total of four bits. Two corresponding code words of two pictures are compared in the comparison block 4. If the code words differ, there was a movement, and if they are equal, then there was no movement.

Fig. 2 shows as an example a 2*2 block BL comprising four picture elements PIX. The figure also shows the factors $PIX_1$, $PIX_2$, $PIX_3$ and $PIX_4$ for the generation of the code word according to the expression $2^0 PIX_1 + 2^1 PIX_2 + 2^2 PIX_3 + 2^3 PIX_4$. The factors $PIX_1$, $PIX_2$, $PIX_3$, $PIX_4$ obtain as values the value of the cut video signal sample, i.e. 1 or 0, so that a code word contains one bit for each picture element PIX. The method provides a movement decision for each Block BL, which means that the movement decisions for the four adjacent picture elements PIX always are equal. The resolution of the movement detector is thus reduced to one quarter of the conventional. This was not found to affect the quality of the picture. Because the number of picture elements PIX in the block BL is not limited to four and the cut video signal sample can be longer than 1, the code word can be formed according to the more general expression below:

$$\sum_{n=1}^{N} 2^{(n-1)k} PIX_n,$$

where k is the length of the cut video signal sample, n is an integer, N is the number of picture elements PIX contained in the block BL, and $PIX_n$ represents the picture elements PIX of the block BL and obtains as a value the value of the cut video signal samples.

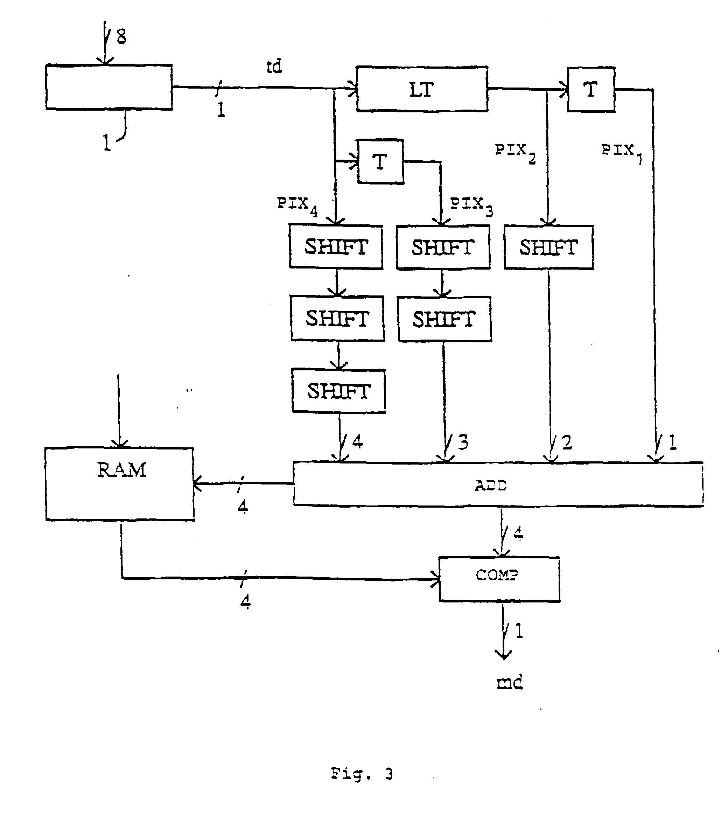

Fig. 3 shows a more detailed construction of a circuit realizing the method. In the figure it is seen that the 8-bit video signal sample is supplied to the thresholding block 1, where it is cut to a 1-bit signal. Then in the memory block 2 the picture is divided into blocks BL of 2*2 elements $PIX_1$, $PIX_2$, $PIX_3$ and $PIX_4$, the memory block containing a line memory LT and two delays T. A code word is generated for the blocks BL in the coding block 3, formed by shift-and add circuits SHIFT and ADD. The 4-bit code word formed of the picture is compared with the code word of the corresponding block BL of the previous picture in order to make the movement decision. The code words of the previous picture are obtained from the RAM memory RAM, which is written and read at the half sampling frequency. The comparison is made in the comparison circuit COMP, which may comprise e. g. AND-circuits. If the comparison result is md = 1, then there was no movement. If the result is md = 0, then there was movement between the pictures.

The movement decision provided by the method was found reliable. The method has a very good noise tolerance, as there is a high threshold before the detection. The change of shades caused by the noise has no effect at this order. The circuit realizing the method is very simple, which reduces the manufactoring costs of the circuit. Instead of the conventional two field memories only a half field memory (720 * 288 * 4 bit) is needed when the video signal sample is cut into a 1-bit signal. Multiplications are not required at all. The invention can be applied in IDTV (Improved Definition Television) and in HDTV IDTV (High Definition Television) receivers, where it can be used to increase both the line rate and the field rate.

**Claims**

1. A method for movement detection in a television picture, wherein the video signal is in digital form and the picture is divided into blocks (BL) having the size of more than one picture element (PIX), each picture element being represented by a digital video signal sample comprising a plurality of bits and wherein a code word is generated for each block, the code word being compared with the code word of the corresponding block (BL) of a previous picture in order to make the movement decision, characterized in that a predetermined number of the most significant bits of each video signal sample of the picture elements of a block is used for generating the code words.

2. Method according to claim 1, characterized in that each video signal sample comprises 8 bits.

3. Method according to claim 1 or 2, characterized in that only the most significant bit of each video signal sample is used for generating said code words.

4. Method according to any previous claim, characterized in that each block (BL) comprises 2*2 picture elements.

5. Method according to any previous claim, characterized in that each code word is formed according to the expression:

$$\sum_{n=1}^{N} 2^{(n-1)k} PIX_n,$$

where k is the number of bits of the video signal sample used for generating the code word, n is an integer, N is the number of picture elements (PIX) contained in each block (BL), and $PIX_n$ represents the picture elements (PIX) of the block (BL) and having as a value the value of the predetermined number of bits of the video signal samples.

6. Circuit arrangement for performing the method according to any of the claims 1 - 5, the arrangement comprising: a memory block (2) in which the picture is divided into blocks (BL) having the size of more than one picture element (PIX) and containing at least one line memory (LT) and at least two delays (T); means for generating a code word for each block; a comparison block (4) in which the code word generated for the block (BL) is compared with the code word of the corresponding block (BL) of the previous picture and containing a RAM memory (RAM) into which the previous picture is stored; and circuits (COMP) to perform the comparison, characterized in that it comprises:

- a thresholding block (1), to which the digital video signal sample is supplied and from which a predetermined number of the most significant bits of each video signal sample of the picture elements of a block is supplied to the memory block (2), and
- a coding block (3), to which the signal is supplied from the memory block (2) and where a code word is generated for the blocks (BL) using said predetermined number of the most significant bits of the digital video signal samples of a respective block and which comprises shift-and-add circuits (SHIFT, ADD) and from which said code word is supplied to the comparison block (4).

7. A circuit arrangement according to claim 6, characterized in that the adding circuit of the coding block (3) has four inputs, and that

- the first input receives from the thresholding block (1) via the line memory (LT) and a delay (T) the bit of the $PIX_1$ factor of the code word,
- the second input receives from the thresholding block (1) via the line memory (LT) and a shift circuit (SHIFT) the bit of the $PIX_2$ factor of the code word,
- the third input receives from the thresholding block (1) via a delay (T) and two shift circuits (SHIFT) the bit of the $PIX_3$ factor of the code word, and
- the fourth input receives from the thresholding block (1) via three shift circuits (SHIFT) the bit of the $PIX_4$ factor of the code word, wherein $PIX_1$, $PIX_2$, $PIX_3$, $PIX_4$ factors represent the picture elements (PIX) of the block (BL) and have as a value the value of the predetermined number of bits of the video signal sample.

8. A circuit arrangement according to claim 6, characterized in that the RAM memory (RAM) of the comparison block (4) comprises a half field memory (720 * 288 * 4 bit).

**Patentansprüche**

1. Verfahren zur Bewegungsdetektion in einem Fernsehbild, wobei das Video-Signal in digitaler Form vorliegt und das Bild in Blöcke (BL) aufgeteilt wird, die die Größe von mehr als einem Bildelement (PIX) aufweisen, wobei jedes Bildelement durch eine digitale Video-Signal-Abtastprobe dargestellt wird, die eine Vielzahl von Bits aufweist, und wobei für jeden Block ein Code-Wort erzeugt wird, das mit dem Code-Wort des entsprechenden Blockes (BL) eines vorhergehenden Bildes verglichen wird, um die Bewegungsentscheidung zu treffen, dadurch gekennzeichnet, daß eine vorherbestimmte Anzahl der höchstwertigen Bits von jeder Video-Signal-Abtastprobe der Bildelemente eines Blokkes zur Erzeugung der Code-Worte verwendet wird.

2. Verfahren nach Anspruch 1, dadurch gekennzeichnet, daß jede Video-Signal-Abtastprobe 8 Bits aufweist.

3. Verfahren nach Anspruch 1 oder 2, dadurch gekennzeichnet, daß nur das höchstwertigste Bit von jeder Video-Signal-Abtastprobe zur Erzeugung der Code-Worte verwendet wird.

4. Verfahren nach einem der vorhergehenden Ansprüche, dadurch gekennzeichnet, daß jeder Block (BL) 2 * 2 Bild-Elemente umfaßt.

5. Verfahren nach einem der vorhergehenden Ansprüche, dadurch gekennzeichnet, daß jedes Code-Wort gemäß dem folgenden Ausdruck gebildet wird:

$$\sum_{n=1}^{N} 2^{(n-1)k} PIX_n,$$

dabei entspricht k der Anzahl der für die Erzeugung des Code-Wortes verwendeten Bits der Video-Signal-Abtastprobe, n ist eine ganze Zahl, N ist die Anzahl von in einem Block (Bl) enthalhaltenen Bildelementen (PIX), und $PIX_n$ stellt die Bildelemente (PIX) des Blocks (BL) dar und weist als einen Wert den Wert der vorherbestimmten Anzahl von Bits der Video-Signal-Abtastproben auf.

6. Schaltungsanordnung zur Durchführung des Verfahrens nach einem der Ansprüche 1 bis 5, wobei die Anordnung umfaßt: einen Speicherblock (2) in dem das Bild in Blöcke (BL) aufgeteilt wird, die die Größe von mehr als einem Bildelement (PIX) aufweisen, und der zumindest einen Zeilenspeicher (LT) und zumindest zwei Verzögerungseinheiten (T) enthält; Einrichtungen zur Erzeugung eines Code-Wortes für jeden Block; einen Vergleicherblock (4), in dem das für den Block (BL) erzeugte Code-Wort mit dem Code-Wort des entsprechenden Blocks (BL) des vorhergehenden Bildes verglichen wird und der einen RAM-Speicher (RAM) enthält, in dem das vorhergehende Bild gespeichert ist; und Schaltungen (COMP) zur Durchführung des Vergleichs, wobei die Schaltungsanordnung dadurch gekennzeichnet ist, daß sie die folgenden Teile aufweist:

- einen Schwellenwertblock (1), dem die digitale Video-Signal-Abtastprobe zugeführt wird und von dem eine vorherbestimmte Anzahl der höchstwertigen Bits von jeder Video-Signal-Abtastprobe der Bildelemente eines Blockes dem Speicherblock (2) zugeführt wird, und

- einen Codierblock (3), dem das Signal von dem Speicherblock (2) zugeführt wird und bei dem unter Verwendung der vorherbestimmten Anzahl der höchstwertigen Bits der digitalen Video-Signal-Abtastproben eines jeweiligen Blockes ein Code-Wort für die Blöcke (BL) erzeugt und der Schiebe-und-Addier-Schaltungen (SHIFT, ADD) aufweist und von dem das Code-Wort dem Vergleicherblock (4) zugeführt wird.

7. Schaltungsanordnung nach Anspruch 6, dadurch gekennzeichnet, daß die Addier-Schaltung des Codierblocks (3) vier Eingänge aufweist, und daß

- der erste Eingang das Bit des $PIX_1$-Faktors des Code-Worts über den Zeilenspeicher (LT) und eine Verzögerungseinheit (T) von dem Schwellenwertblock (1) empfängt,

- der zweite Eingang das Bit des $PIX_2$-Faktors des Code-Worts über den Zeilenspeicher (LT) und eine Schiebe-Schaltung (SHIFT) von dem Schwellenwertblock (1) empfängt,

- der dritte Eingang das Bit des $PIX_3$-Faktors des Code-Worts über eine Verzögerungseinheit (T) und zwei Schiebe-Schaltungen (SHIFT) von dem Schwellenwertblock (1) empfängt, und

- der vierte Eingang das Bit des $PIX_4$-Faktors des Code-Worts über drei Schiebeschaltungen (SHIFT) von dem Schwellenwertblock (1) empfängt, wobei die $PIX_1$-, $PIX_2$-, $PIX_3$-, $PIX_4$-Faktoren die Bildelemente (PIX) des Blockes (BL) darstellen und als einen Wert den Wert der vorherbestimmten Anzahl von Bits der Video-Signal-Abtastprobe aufweisen.

8. Schaltungsanordnung nach Anspruch 6, dadurch gekennzeichnet, daß der RAM-Speicher (RAM) des Vergleichsblocks (4) einen Halb-Bildfeldspeicher (720 * 288 * 4 Bit) aufweist.

**Revendications**

1. Procédé destiné à la détection d'un mouvement dans une image de télévision, dans lequel le signal vidéo est sous forme numérique et l'image est partagée en blocs (BL) présentant une taille qui dépasse un élément d'image (PIX), chaque élément d'image étant représenté par un échantillon de signal vidéo numérique comprenant une pluralité de bits et dans lequel un mot de code est généré pour chaque bloc, le mot de code étant comparé au mot de code du bloc correspondant (BL) d'une image précédente, pour pouvoir établir la définition d'un mouvement,

caractérisé en ce qu'un nombre prédéterminé des bits les plus significatifs de chaque échantillon de signal vidéo des éléments d'image d'un bloc, est utilisé pour générer les mots de code.

2. Procédé selon la revendication 1, caractérisé en ce que chaque échantillon de signal vidéo comprend 8 bits.

3. Procédé selon la revendication 1 ou 2, caractérisé en ce que seul le bit le plus significatif de chaque échantillon de signal vidéo est utilisé pour générer lesdits mots de code.

4. Procédé selon l'une quelconque des revendications précédentes, caractérisé en ce que chaque bloc (BL) comprend 2*2 éléments d'image.

5. Procédé selon l'une quelconque des revendications précédentes, caractérisé en ce que chaque mot de code est formé conformément à l'expression :

$$\sum_{n=1}^{N} 2^{(n-1)k} PIX_n,$$

dans laquelle k est le nombre des bits de l'échantillon de signal vidéo utilisé pour générer le mot de code, n est un nombre entier, N est le nombre des éléments d'image (PIX) contenus dans chaque bloc (BL) et $PIX_n$ représente les éléments d'image (PIX) du bloc (BL) et présentant comme valeur la valeur du nombre prédéterminé des bits des échantillons du signal vidéo.

6. Agencement de circuits destiné à mettre en oeuvre le procédé conforme à l'une quelconque des revendications 1 à 5, l'agencement comprenant : un bloc de mémoire (2) dans lequel l'image est partagée en blocs (BL) présentant une taille qui dépasse un élément d'image (PIX) et contenant au moins une mémoire de ligne (LT) et au moins deux circuits à retard (T), un moyen destiné à générer un mot de code pour chaque bloc, un bloc de comparaison (4) dans lequel le mot de code généré pour le bloc (BL) est comparé au mot de code du bloc correspondant (BL) de l'image précédente et contenant une mémoire vive (RAM) dans laquelle l'image précédente est mémorisée, et des circuits (COMP) pour effectuer la comparaison, caractérisé en ce qu'il comprend :

- un bloc d'application de seuil (1) auquel l'échantillon de signal vidéo numérique est appliqué, et à partir duquel un nombre prédéterminé des bits les plus significatifs de chaque échantillon de signal vidéo des éléments d'image d'un bloc est appliqué au bloc de mémoire (2), et

- un bloc de codage (3), auquel est appliqué le signal provenant du bloc de mémoire (2) et où un mot de code est généré pour les blocs (BL) en utilisant ledit nombre prédéterminé des bits les plus significatifs des échantillons du signal vidéo numérique d'un bloc respectif et qui comprend des circuits de décalage et d'addition (DECALAGE ET ADD) et à partir desquels ledit mot de code est appliqué au bloc de comparaison (4)

7. Agencement de circuits suivant la revendication 6, caractérisé en ce que le circuit d'addition du bloc de codage (3) comporte 4 entrées, et en ce que

- la première entrée reçoit du bloc d'application de seuil (1), par l'intermédiaire de la mémoire de ligne (LT) et d'un circuit à retard (T), le bit du facteur $PIX_1$ du mot de code,
- la seconde entrée reçoit à partir du bloc d'application de seuil (1), par l'intermédiaire de la mémoire de ligne (LT) et d'un circuit de décalage (DECALAGE) le bit du facteur $PIX_2$ du mot de code,
- la troisième entrée reçoit du bloc d'application de seuil (1) par l'intermédiaire d'un circuit à retard (T) et de deux circuits à décalage (DECALAGE) le bit du facteur $PIX_3$ du mot de code, et
- la quatrième entrée reçoit à partir du bloc d'application de seuil (1), par l'intermédiaire de trois circuits à décalage (DECALAGE) le bit du facteur $PIX_4$ du mot de code, dans lequel les facteurs $PIX_1$, $PIX_2$, $PIX_3$, $PIX_4$ représentent les éléments d'image (PIX) du bloc (BL) et présentent comme valeur la valeur du nombre prédéterminé de bits de l'échantillon de signal vidéo.

8. Agencement de circuits selon la revendication 6, caractérisé en ce que la mémoire vive (RAM) du bloc de comparaison (4) comprend une demi-mémoire de trame (720 * 288 * 4 bits).

Fig. 1

Fig. 2

Fig. 3